# EUROPEAN PATENT APPLICATION

(11) **EP 4 336 318 A1**
(43) Date of publication of application: **13.03.2024**
(21) Application number: 23196318.2
(22) Date of filing: 08.09.2023
(51) Int. Cl.: G06F 3/01, B25J 9/16, G05D 1/00, G06F 1/16, B64G 6/00

(54) **MULTIMODAL SPACESUIT SMART GLOVE**

(30) Priority: 08.09.2022 US 202263404946 P
(71) Applicant: Hamilton Sundstrand Corporation, Charlotte, NC 28217-4578 (US)
(72) Inventor: ROHRIG, Jake, Simsbury, CT 06070 (US); LUKER, Kelly, Glastonbury, CT 06033 (US)
(74) Representative: Dehns

(57) **Abstract**

A glove (110) for human work in extreme environments includes a body formed to substantially surround a human hand, at least one sensor (131, 133) provided in connection with the body, positioned to detect an extent of movement of a respective joint of the human hand, a controller (123) provided in connection with the glove, adapted and configured to translate a signal generated by the sensor into a control signal, and to transmit the control signal to a receiver housed within a spacesuit informatics system.

## Description

### CROSS-REFERENCE TO RELATED APPLICATIONS

This Application claims the benefit of priority to U.S. Patent Application Serial Number 63/404,946 filed September 8, 2023.

### BACKGROUND OF THE INVENTION

With the impending establishment of the NASA Gateway project and preparations for future lunar habitation under the NASA Artemis project, there will be much work for astronauts to complete in order to establish long term presence in outer space. While robots will assist the work of astronauts, there will still remain a large requirement of manual labor, as astronauts currently use their own hands to hold tools, control equipment and perform other tasks. Due to pressurization and complex construction of spacesuits and gloves, it often proves tiresome for astronauts to lift and grip such items for an extended period. Accordingly, work breaks must be taken, which reduce efficiency. Further, spacesuit gloves also limit the dexterity of the astronaut, and make many interactions with their environment inefficient. Moreover, terrain that may be of interest, but proves difficult or dangerous to fully explore on-foot can be explored with remotely operated vehicles, such as drones, but carrying and using separate controllers may be cumbersome while wearing traditional spacesuit gloves.

Applicant therefore recognizes a need for devices, systems and methods that improve astronaut efficiency and reduce fatigue, particularly while performing extra-vehicular activities (EVAs), which require use of spacesuits. The subject devices, systems and methods, however, can also advantageously be applied to applications within a vehicle (e.g., space station) to improve efficiency and reduce fatigue, while using the same, familiar gestures that are learned for use during EVAs. The devices, systems and related methods of the present disclosure provide solutions for these needs.

### SUMMARY OF THE INVENTION

In accordance with the present invention, devices, systems and methods are provided that enable more efficient use of astronaut time and energy by enabling fast and intuitive control of internal spacesuit controls and informatics, as well as control of external devices, such as robotic arms, flying drones and surface rovers.

In accordance with one aspect of the invention, a glove for human work in extreme environments includes a body formed to substantially surround a human hand, at least one sensor provided in connection with the body, positioned to detect an extent of movement of a respective joint of the human hand, and a controller provided in connection with the glove, adapted and configured to translate a signal generated by the sensor into a control signal, and to transmit the control signal to a receiver housed within a spacesuit informatics system.

The control signal can be configured to manipulate functions of a spacesuit informatics system. The control signal can be configured to manipulate an external asset. The external asset can be adapted and configured to be controlled through a spacesuit informatics system. The external asset can be a robotic arm. The external asset can be a flying drone. The external asset can be a surface rover.

The controller can be adapted and configured to transmit the control signal over electrical conductors to the spacesuit informatics system. The controller can be adapted and configured to transmit the control signal wirelessly to the spacesuit informatics system.

The controller can be adapted and configured to receive power over electrical conductors from the spacesuit informatics system. The glove can further include a battery for supplying power to the controller. The controller can be adapted and configured to receive power wirelessly from the spacesuit informatics system. The glove can be adapted and configured to harvest power from a surrounding environment and provide the power to the controller.

In accordance with a further aspect of the invention, a system for gesture control of electronic devices includes a glove having at least one sensor, an informatics controller operably connected to the glove, adapted and configured to receive control signals from the glove and to display information to a user, enabling manipulation of displayed information by way of gestures made with the glove, a connection from the informatics controller to an external asset, enabling control of the external asset by way of gestures made with the glove, and a mode selector adapted and configured to change control between manipulation of displayed information of the informatics controller, and manipulation of the external asset.

The mode selector can include at least one eye-tracking sensor, the mode selector being configured to disengage hand gesture control of the external asset when the user looks away from the external asset or an image provided from the asset to the informatics system and displayed to the user. The image provided from the asset can be a video image from a camera mounted on the asset.

In accordance with still a further aspect of the invention, a method of control of electronic devices includes selecting a first device provided in connection with a spacesuit informatics system to control by looking at a first display provided in connection with the first device, controlling the first device with hand gestures detected by at least one sensor provided in connection with at least one glove, selecting a second device provided in connection with a spacesuit informatics system to control by looking at a second display provided in connection with the second device, and controlling the second device with hand gestures detected by the at least one sensor provided in connection with the at least one glove.

The method can further include selecting a third device provided in connection with a spacesuit informatics system to control by looking at a third display provided in connection with the third device and controlling the third device with hand gestures detected by the at least one sensor provided in connection with the at least one glove. The first device can be an informatics system data display, and the second device can be an external asset.

### BRIEF DESCRIPTION OF THE DRAWINGS

So that those skilled in the art to which the subject disclosure appertains will readily understand how to make and use the devices, systems and methods of the subject disclosure without undue experimentation, embodiments thereof will be described in detail herein below with reference to certain figures, wherein:
Figure 1 is a schematic representation of smart glove system in accordance with the invention;
Figure 2 is a graphical representation of a smart glove in connection with a system in accordance with the invention as well as a controlled external asset;
Figure 3 is a flow chart illustrating integrated control of external assets by way of an operation mode of the glove; and
Figure 4 is an isometric view illustrating placement of various sensors with respect to a user's hand.

### DETAILED DESCRIPTION OF THE INVENTION

Reference will now be made to the drawings wherein like reference numerals identify similar structural features or aspects of the subject disclosure.

In accordance with the present invention, devices, systems and methods are provided that enable more efficient use of astronaut time and energy by enabling fast and intuitive control of internal spacesuit controls and informatics, as well as control of external devices, such as robotic arms, flying drones and surface rovers, such as a lunar terrain vehicle. Advantageously, the subject devices, systems and methods can reduce the overall amount of hardware needed by eliminating certain external spacesuit controls, as well as the need for separate controllers for manipulation of external assets.

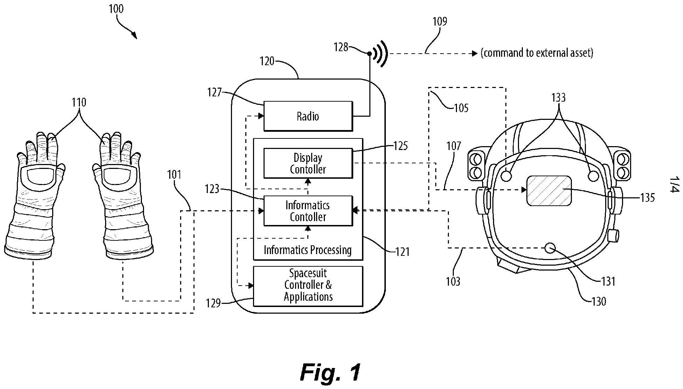

For purposes of explanation and illustration, and not limitation, illustrated in Figure 1 is a system 100, in accordance with one aspect of the present invention, which includes one or more smart gloves 110, a portable life support system 120 and spacesuit helmet 130. Control signals 101 are sent over conductors or wirelessly from one or both gloves 110 to electronics housed within the portable life support system 120. If implemented wirelessly, the control signal can be of a low-power consumption type, such as Bluetooth or Wi-Fi, for example.

In particular, the onboard informatics controller 123 is configured to handle input of control signals in the illustrated embodiment. However, alternate or intermediary circuitry can be provided. The informatics controller 123 interfaces with a display controller 125, to output a video signal 107 to one or more displays 135 provided in the spacesuit helmet 130. The informatics controller 123 also receives audio input 103, including spoken commands from the microphone 131. Additionally, one or more eye-tracking sensors 133 are also provided, and feed data 105 back to the informatics controller 123, as will be discussed in further detail below. In the illustrated embodiment, the informatics controller 123 and display controller 125 comprise core informatics processor 121 functions, while other functions can additionally be provided, as desired or required. The informatics processor 121 interfaces with spacesuit controller 129 and its applications. Functions that can be achieved by the spacesuit controller 129 are management of the internal climate within the spacesuit, including temperature and oxygen level. Additionally, mapping applications, manipulation of maps, and any specialized applications for tethered or remotely controlled equipment. Additionally, one or more radio transceivers 127 are provided, depending on the desired implementation. The one or more radio transceivers 127 can interface with communications systems to other spacesuits and/or nearby vehicles, but also advantageously can interface with external assets, such as robotic arms, flying drones or surface rovers, for example. Such connections 109 can be bidirectional, if weight and power concerns allow. As such, when so equipped, movement commands can be sent to such external asset, while feedback is received. Such feedback can include live video feed, and operational data, such as battery level or malfunction information. One or more internal or external antennas 128 can be provided, as needed, depending on the precise implementation.

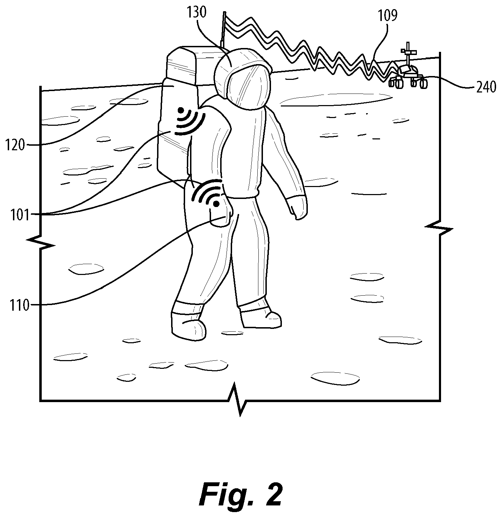

Figure 2, for purposes of explanation and illustration, and not limitation, illustrates an astronaut performing an EVA, wherein the spacesuit is provided with a system in accordance with the invention. The system includes a helmet 130, portable life support system 120, and a smart glove 110, connected by wireless data connection 101 to the portable life support system 120. A wireless connection 109 to an external asset 240, in this case, a surface rover, is also illustrated.

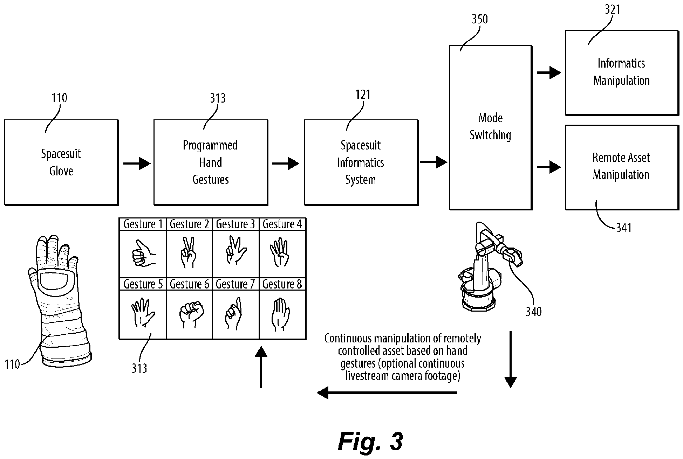

Figure 3 is a flow chart illustrating integrated control of external assets by way of an operation mode of the glove. As illustrated, the spacesuit informatics system 121 and spacesuit smart glove 110 utilize hand gestures 313, which can be predetermined as desired, but for which certain examples of hand gestures are shown. Hand gestures 313 are then used in manipulation of informatics system menus and applications 321 and control 341 of external assets 340. Informatics subsystems can also be controlled or manipulated, such as subsystems relating to video, voice, audio and map displays. In order to determine the mode the aforementioned gestures are to control, a mode selector 350 is provided. Such mode selector 350 can require active input by a user, such as through the displayed menus of the informatics system 121, or can be partially or fully automated, utilizing eye tracking sensors 133 and/or proximity sensors, for example. Further, control can be switched between multiple external assets 340, such as between a robotic arm and a surface rover.

Moreover, systems in accordance with the invention can be configured to interface with other such systems. In addition to sharing data and communications, control of external assets can be shared between multiple astronauts using spacesuits equipped in accordance with the invention. Control can be passed to/from one another, and/or by individually controlling different aspects of the external asset. For example, one astronaut can control positioning of a surface rover, while another controls a robotic arm or other instrument mounted on the surface rover. Similarly, one astronaut can control flying drone X-Y-Z positioning, while another controls camera parameters-such as pan/tilt/zoom, and others.

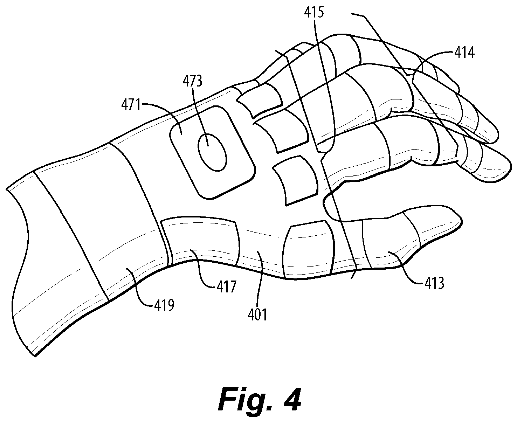

Figure 4 is an isometric view illustrating example placement of various sensors with respect to a user's hand. Depending on the implementation, sensors, such as strain gauges or the like, can be placed with respect to the glove and the user's hand in order to detect extent of flexion and/or extension in the user's hand(s). As such, the detectors can be provided in a close-fitting layer or underlayer, if desired. Such close-fitting layer 401 in accordance with one aspect of the invention can be formed from a woven or knit textile such that sensors secured thereto are in close proximity to the controlling joint. That is, sensors can be applied to the close-fitting layer 401, while a more traditional protective overlayer or performance outerwear layer, as illustrated in 110 of Figure 1, is provided for protection from abrasion, debris and pressure differentials, such as those encountered when working in outer space or reduced atmosphere conditions on other planets. Alternatively or additionally, one or more sensors can be integrated into the protective overlayer.

Placement of sensors can bridge or otherwise detect the degree of flexion across the dorsal aspect of various finger joints, including first, second, third, fourth and fifth metacarpophalangeal joint (knuckle) sensors 415, the first interphalangeal joint (thumb) sensor 413, second, third, fourth and fifth proximal interphalangeal joint sensors 414 and/or distal interphalangeal joint sensors, and the first carpometacarpal joint sensor 417. Because of limits of independent movement of hand joints, some of these joints may prove less useful than others, for control functions, but may still be useful in interpreting user input.

Dorsal placement of sensors can minimize interference or irritation of the user's hand, depending on the sensor type, as the user will likely be required to grip and otherwise manipulate tools. However, if sensors are small enough to be unobtrusive, then alternate placement positions are possible, including lateral and/or medial surfaces and ventral surfaces.

Moreover, one or more radiocarpal joint (wrist) sensors 419 can be of use in flexion and extension. Therefore, alternatively or additionally, ventral sensors can be placed. Because such sensors would be outside of an area needed for gripping by a user, ventral placement is unlikely to impede comfort or function.

Furthermore, one or more accelerometers 473 can be provided on gloves or in connection with a circuit 471 therefor, in accordance with the invention, in order to allow input by way of gestures of the entire hand in three dimensions. Use of accelerometers may require programming of any attached controller to compensate for varying gravity of the surroundings. As such, a calibration option can be presented to a user through the informatics system to set when in an area to be used - in such case, the connected controller measures sensor data, as the user confirms to the system that the glove/sensor is at rest. Additionally, depending on the implementation, one or more buttons can be provided on the gloves. For example, buttons can be provided on the dorsal surface of the glove for activation by the user's other hand.

Depending on the sensor type, the required number of conductors can lead to a signal processing unit, which can be provided locally in or on the glove circuitry 471, or remotely in nearby hardware, such as in a portable life support system of a spacesuit. The signal processing unit functions to translate between sensor output and a control signal. Further internal processing within the signal processing unit can include calibration settings to set threshold for movement, and/or a filtering function to prevent small movements from being translated into control signals. Further, a radio transmitter can be provided in order to provide wireless connection to controlled devices. Moreover, a power source can be provided to power internal circuitry. The power source can be hard wired, if available based on ancillary equipment, a battery, or circuity to enable wireless power harvesting (EM, RF, solar, thermal, kinetic). Optionally, power can be provided wirelessly to one or both gloves 110, such as described in EP 3,462,576 to Energous Corp. Harvesting of kinetic energy can also be utilized, such as described by US Pat. No. 7,245,062 to Schmidt.

Alternative gloves which can be incorporated into systems of the invention can be configured in any suitable manner to detect user input by way of gesture. Some alternative aspects for gloves using sensors are described by U.S. Pat. No. 9,104,271 to Adams, et al., U.S. Pat. No. 10,842,578 to Hashimoto, et al., and U.S. Pat. Pub. No. 2021/0386145 to Dong et al.

In accordance with the invention, it is also to be understood that either one or both gloves in use by a user can be equipped with sensors, connected to systems in accordance with the invention.

While the devices, systems and methods of the subject disclosure have been shown and described with reference to embodiments, those skilled in the art will readily appreciate that changes and/or modifications may be made thereto without departing from the scope of the invention as defined by the claims.

## Claims

1. A glove for human work in extreme environments, comprising:
a body formed to substantially surround a human hand;
at least one sensor (131, 133) provided in connection with the body, positioned to detect an extent of movement of a respective joint of the human hand; and
a controller (123) provided in connection with the glove, adapted and configured to translate a signal generated by the sensor into a control signal, and to transmit the control signal to a receiver housed within a spacesuit informatics system.

2. The glove of claim 1, wherein the control signal is configured to manipulate functions of a spacesuit informatics system

3. The glove of claim 1, wherein the control signal is configured to manipulate an external asset (240, 340).

4. The glove of claim 3, wherein the external asset is adapted and configured to be controlled through a spacesuit informatics system.

5. The glove of claim 3 or 4, wherein the external asset is a robotic arm, or wherein the external asset is a flying drone, or wherein the external asset is a surface rover.

6. The glove of any preceding claim, wherein the controller is adapted and configured to transmit the control signal over electrical conductors to the spacesuit informatics system, or wherein the controller is adapted and configured to transmit the control signal wirelessly to the spacesuit informatics system, or wherein the controller is adapted and configured to receive power over electrical conductors from the spacesuit informatics system.

7. The glove of any preceding claim, further comprising a battery for supplying power to the controller.

8. The glove of any preceding claim, wherein the controller is adapted and configured to receive power wirelessly from the spacesuit informatics system.

9. The glove of any preceding claim, wherein the glove is adapted and configured to harvest power from a surrounding environment and provide the power to the controller.

10. A system for gesture control of electronic devices, comprising:
a glove (110) having at least one sensor (131, 133);
an informatics controller (123) operably connected to the glove, adapted and configured to receive control signals from the glove and to display information to a user, enabling manipulation of displayed information by way of gestures made with the glove;
a connection (109) from the informatics controller to an external asset (240, 340), enabling control of the external asset by way of gestures made with the glove; and
a mode selector (350) adapted and configured to change control between manipulation of displayed information of the informatics controller, and manipulation of the external asset.

11. The system of claim 10, wherein the mode selector includes at least one eye-tracking sensor (133), the mode selector being configured to disengage hand gesture control of the external asset when the user looks away from the external asset or an image provided from the asset to the informatics system and displayed to the user.

12. The system of claim 11, wherein the image provided from the asset is a video image from a camera mounted on the asset.

13. A method of control of electronic devices, comprising:
selecting a first device provided in connection with a spacesuit informatics system to control by looking at a first display provided in connection with the first device;
controlling the first device with hand gestures detected by at least one sensor provided in connection with at least one glove;
selecting a second device provided in connection with a spacesuit informatics system to control by looking at a second display provided in connection with the second device; and
controlling the second device with hand gestures detected by the at least one sensor provided in connection with the at least one glove.

14. The method of claim 13, further comprising:
selecting a third device provided in connection with a spacesuit informatics system to control by looking at a third display provided in connection with the third device; and
controlling the third device with hand gestures detected by the at least one sensor provided in connection with the at least one glove.

15. The method of claim 13 or 14,
wherein the first device is an informatics system data display; and
wherein the second device is an external asset.
